# EUROPÄISCHE PATENTSCHRIFT

(11) **EP 1 936 778 B1**
(45) Veröffentlichungstag und Bekanntmachung des Hinweises auf die Patenterteilung: **27.07.2011**
(21) Anmeldenummer: 07122969.4
(22) Anmeldetag: 12.12.2007
(51) Int. Cl.: H02K 1/14, H02K 3/34, H02K 1/27, H02K 1/30

(54) **Zweiteiliger Stator mit Isolationskörper und Permanentmagnetrotor mit Rotorträger**
Split stator comprising bobbin and permanent magnet rotor comprising a holder
Stator divisé en deux parties comprenant un corps isolant et un rotor aux aimants permanents comprenant un support

(30) Priorität: 19.12.2006 DE 202006019091 U
(43) Veröffentlichungstag der Anmeldung: 25.06.2008
(73) Patentinhaber: ebm-papst Mulfingen GmbH & Co. KG, 74673 Mulfingen (DE)
(72) Erfinder: Best, Dieter, 74653 Ingelfingen (DE)
(74) Vertreter: Patentanwälte Dr. Solf & Zapf

(56) Entgegenhaltungen:
- EP-A- 0 982 835
- EP-A- 1 583 201
- EP-A- 1 841 041
- WO-A-01/91266
- WO-A-02/45246
- GB-A- 2 172 444
- GB-A- 2 323 217
- US-A- 6 081 059

## Beschreibung

Die vorliegende Erfindung betrifft einen Stator für einen elektrischen Motor, bestehend aus einem zweiteiligen Statorblechpaket mit einem inneren Statorpolteil und einem auf dieses aufpressbaren äußeren Jochteil und einen Rotor, der weiter unten beschrieben wird.

Ein derartiger Stator ist aus der US-PS 5,134,327 bekannt. Hierbei wird der Isolationskörper für den Stator jedoch durch Spritzgießen hergestellt, wodurch sich ein relativ aufwändiges Herstellungsverfahren ergibt.

Der vorliegenden Erfindung liegt die Aufgabe zu Grunde, die Herstellung eines derartigen Stators kostengünstiger zu gestalten, wie auch aus den Dokumenten JP 2002 374650A, EP 1583201 A und GB 2172444 A bekannt.

Erfindungsgemäß wird dies dadurch erreicht, dass das Statorpolteil aus einzelnen paketierten Polsegmenten (Polzähnen) besteht, die in einem vorgefertigten Isolationskörper sternförmig angeordnet sind und von diesem an ihren axialen beiden Stirnseiten und im Bereich eines zwischen Ihnen ausgebildeten Wickelraums für die Aufnahme der Statorwicklungen umschlossen sind. Hierbei ist es vorteilhaft, wenn der Isolationskörper zweiteilig aus einem Trägerteil und einer Endscheibe besteht, die miteinander form- und/oder materialschlüssig verbunden und die Polsegmente in das Trägerteil eingelegt sind. Durch die erfindungsgemäße Vorfertigung des Isolationskörpers und der Trägerteils ergibt sich eine preiswerte Herstellung, da die Herstellungskosten wesentlich reduziert werden können. Darüber hinaus ergibt sich eine flexible Fertigung des Statorteils.

Die Erfindung bezieht sich zusätzlich auf einen Rotor für einen Elektromotor, bestehend aus einem Rotorträger mit auf diesem angeordneten Magneten wechselnder Polarität und einem inneren Eisenrückschlussring. Bei einem derartigen Rotor stellt sich die Aufgabe einer kostengünstigen Fertigung, wie auch im Dokument EP 0 982 835 A beschrieben.

Erfindungsgemäß wird diese Aufgabe dadurch gelöst, dass der Rotorträger aus einer hohlzylindrischen Kunststoffhülse besteht, an der einendig eine Ringscheibe mit einem Ringkragen angeformt ist sowie in dem Ringkragen innenseitig umfangsgemäß Einstecknuten zur stirnseitigen Aufnahme der Magnete und des Eisenrückschlussringes angeordnet sind, sowie aus einem dem Ringkragen gegenüberliegenden, an die Magneten anliegenden, diese formschlüssig endseitig aufnehmenden, ringförmigen Endstück aus Kunststoff.

Diese erfindungsgemäße Ausgestaltung macht wiederum eine Vorfertigung der gesamten Einzelteile möglich, die dann anschließend zu dem erfindungsgemäßen Motor zusammengesetzt werden können.

Weitere vorteilhafte Ausführungen der Erfindung sind in den Unteransprüchen enthalten.

An Hand der in den beiliegenden Zeichnungen dargestellten Ausführungsbeispiele wird die Erfindung näher erläutert. Es zeigen:
- Fig.1 1: eine Explosionsansicht eines erfindungsgemäßen Stators vor dem Zusammenfügen der Einzelteile,
- Fig. 2: eine Ansicht des erfindungsgemäßen Stators gemäß Fig. 1 nach dem Zusammensetzen der Einzelteile,
- Fig. 3: eine Explosionsansicht eines erfindungsgemäßen Rotors,
- Fig.4: eine perspektivische Ansicht eines zusammengesetzten erfindungsgemäßen Rotors gemäß Fig. 3,
- Fig. 5: einen Querschnitt durch einen erfindungsgemäßen Motor, bestehend aus dem Stator gemäß Fig. 2 und dem Rotor gemäß Fig. 4.

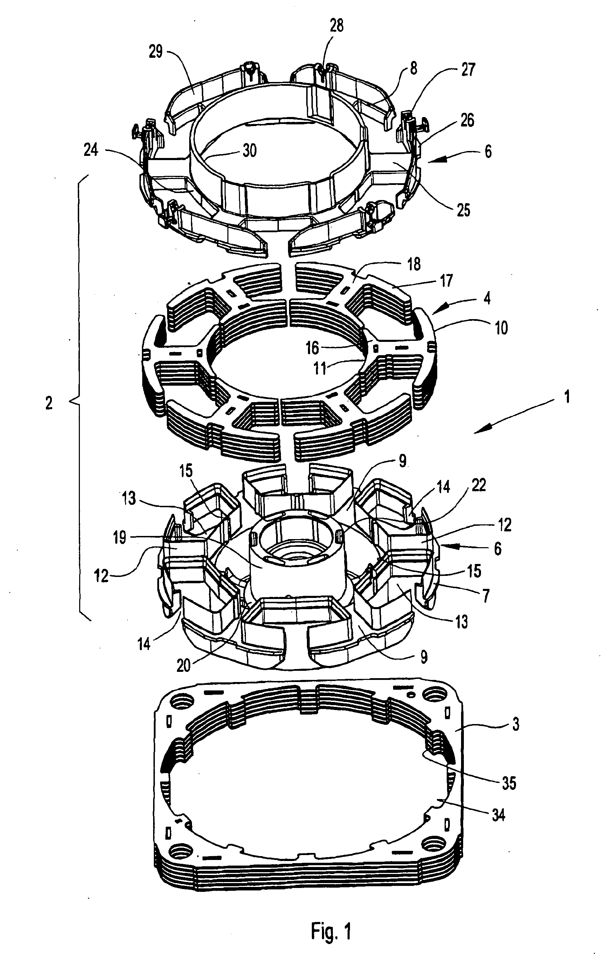

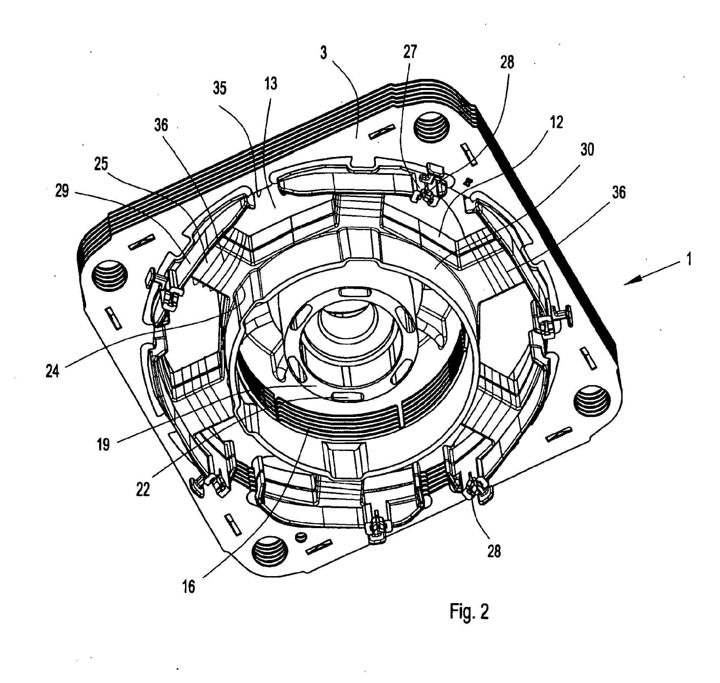

Wie aus Fig. 1 und 2 zu erkennen ist, ist ein erfindungsgemäßer Stator 1 für einen elektrischen Motor, der als Innenläufer ausgebildet ist, vierteilig ausgebildet. Hierbei besteht der Stator 1 aus einem zweiteiligen Statorblechpaket, bestehend aus einem Statorpolteil 2 und aus einem auf dieses aufpressbaren äußeren Jochteil 3. Hierbei ist erfindungsgemäß das Statorpolteil 2 aus einzelnen paketierten Polsegmenten 4 (Statorzähne) gebildet, die in einem vorgefertigten Isolationskörper 6 sternförmig angeordnet sind. Der Isolationskörper 6 ist zweiteilig aus einem Trägerteil 7 und einer Endscheibe 8 gebildet. Das Trägerteil 7 und die Endscheibe 8 werden miteinander form- und/oder materialschlüssig verbunden. Die einzelnen Polsegmente 4 (Statorzähne) werden in das Trägerteil 7 vor dem Zusammenfügen von Trägerteil 7 und Endscheibe 8 eingelegt. Hierzu weist das Trägerteil 7 der Form der Polsegmente 4 angepasste Taschen 9 auf, die von zwischen der äußeren Stirnseite 10 und der inneren Stirnseite 11 der Polsegmente 4 verlaufende Wandungen 12 begrenzt werden. Die Wandungen 12 benachbarter Polsegmente 4 sind an ihren radial innenliegenden Enden miteinander verbunden. Die Wandungen 12 schließen jeweils einen Wickelraum 13 ein, der am äußeren Umfangsbereich einen mittig angeordneten Wicklungsschlitz 14 besitzt. Im Verbindungsbereich der radial gesehen innenliegenden Enden der Wandungen 12 sind in axialer Richtung verlaufende Stege 15 vorhanden, an denen die Polsegmente 4 mit ihren inneren Polschuhen 16 stirnseitig anliegen. Die Polsegmente 4 sind im Wesentlichen Doppel-T förmig ausgebildet und besitzen die inneren Polschuhe 16 und äußere Polschuhe 17, die durch einen Steg 18 miteinander verbunden sind. Die inneren Polschuhe 16 und die äußeren Polschuhe 17 sind kreisbogenförmig ausgebildet, wobei die Bogenlänge der äußeren Polschuhe 17 größer ist als die der inneren Polschuhe 16. Die Polsegmente 4 und das Jochteil 3 werden im sogenannten Stanzpaketierverfahren hergestellt, wobei im vorliegenden Ausführungsbeispiel der Stator sechs Polsegmente 4 (Statorzähne) besitzt. Hierbei ist erfindungsgemäß der Stator 1 derart aufgebaut, dass die einzelnen Polsegmente 4 aus dem Innendurchmesser gestanzt werden können.

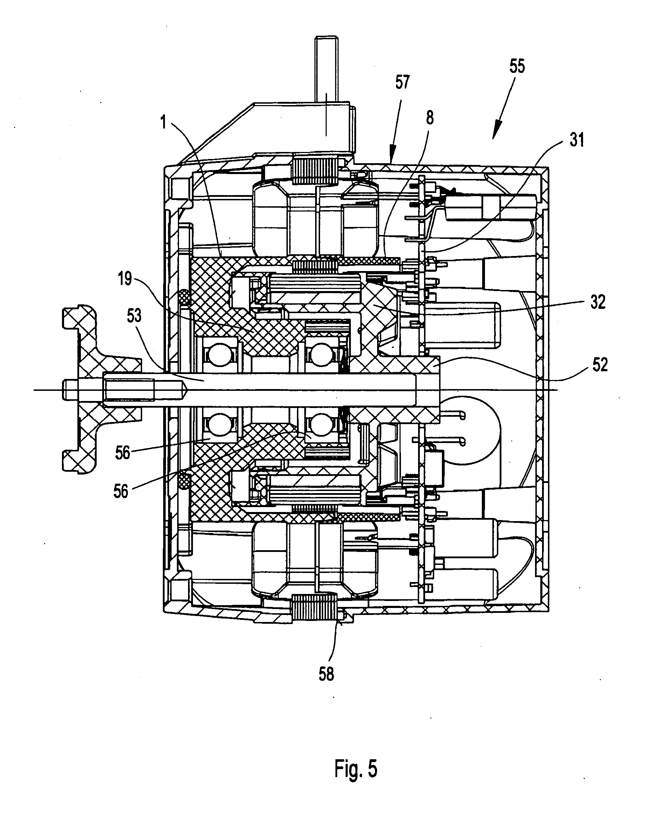

Das Trägerteil 7 weist ein innenliegendes Lagertragrohr 19 auf, das von einer äußeren axialen Stirnwandung 20 des Trägerteils 7 axial nach innen in das Trägerteil 7 hinein verläuft. Somit kann erfindungsgemäß der Stator 1 das Lagersystem aufnehmen. Das Lagertragrohr 19 besitzt in einem Endbereich mehrere, insbesondere sechs umfangsgemäß gleichbeabstandete axial verlaufende Hohlkammern 22 oder auf der Rohrwandung umfangsgemäß ausgebildete Einbuchtungen. Hierdurch ergibt sich in diesem Bereich eine Elastizität, wodurch eine Anordnung der Motorlager, siehe Fig. 5, ohne eine zusätzliche Lagersitzbearbeitung möglich ist.

Die Endscheibe 8 besitzt einen inneren geschlossenen Ringsteg 24, an dem radial nach außen Radialstege 25 verlaufen. An den Enden der Radialstege 25 sind endseitig Umfangsstege 26 angeformt. Der Ringsteg 24, die Radialstege 25 und die Umfangsstege 26 sind derart ausgebildet, dass sie die in das Trägerteil 7 eingelegten Polsegmente 4 stirnseitig vollständig abdecken. Die Endscheibe 8 weist im Bereich der Umfangsstege 26 Aufnahmetaschen 27 auf, in denen Schneid-Klemmkontakte 28 eingesetzt werden können. Weiterhin sind an der Endscheibe 8 im Bereich der Umfangsstege 26 axial nach außen abstehende Ringstege 29 vorhanden. Im Bereich des inneren geschlossenen Ringstegs 24 der Endscheibe 8 besitzt diese einen axial nach außen abstehenden Umfangskragen 30. Durch die Ausbildung von zusätzlichen Rastelementen und dergleichen an der Endscheibe 8 können an dieser bei der Montage eines Motors auch eine Leiterplatte 31, siehe Fig. 5, befestigt werden. Der erfindungsgemäße Aufbau ermöglicht eine genaue Zuordnung des Stators 1 und eines in diesen einzusetzenden Rotors 32 sowie der Leiterplatte 31 mit dem auf dieser montierten Hall-IC ohne zusätzliche Bearbeitung.

Nachdem in das Trägerteil 7 die Polsegmente 4 eingelegt sind, kann die Endscheibe 8 aufgesetzt werden und mit dem Trägerteil 7 verbunden werden. Dieses derart gebildete Statorpolteil 2 wird nun mit dem Jochteil 3 verbunden, das den Rückschlussring bildet. Hierzu wird das Jochteil 3 auf den Umfang des Statorpolteils 2 aufgepresst. Das Jochteil 3 besitzt einen im Wesentlichen quadratischen Umfang und eine innere kreisförmige Aufnahmeöffnung 34, die von der Größe dem Umfang des Statorpolteils 2 angepasst ist, so dass diese durch einen Presssitz miteinander verbunden werden können. Das Jochteil 3 besitzt am Umfang seiner Aufnahmeöffnung 34 radial abstehende, axial verlaufende Randstege 35, die im aufgepressten Zustand des Jochteils 3 in die Wicklungsschlitze 14 hineinragen.

Vor dem Aufpressen des Jochteils 3 kann erfindungsgemäß eine Statorwicklung 36 aufgebracht werden, wobei es sich hierbei um eine sogenannte Flyer-Wicklung handelt, so dass eine besonders kostengünstige Wicklungstechnik angewendet werden kann. Die Statorwicklung 36 ist in Fig. 2 schematisch dargestellt, wobei in dieser Fig. der aus dem Statorpolteil 2 und dem Jochteil 3 zusammengesetzte Stator 1 dargestellt ist.

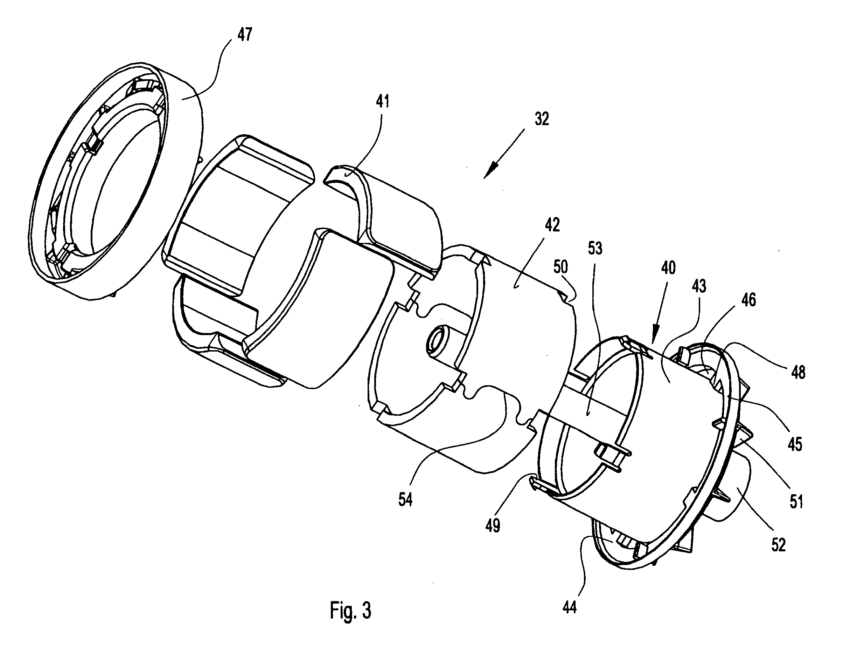

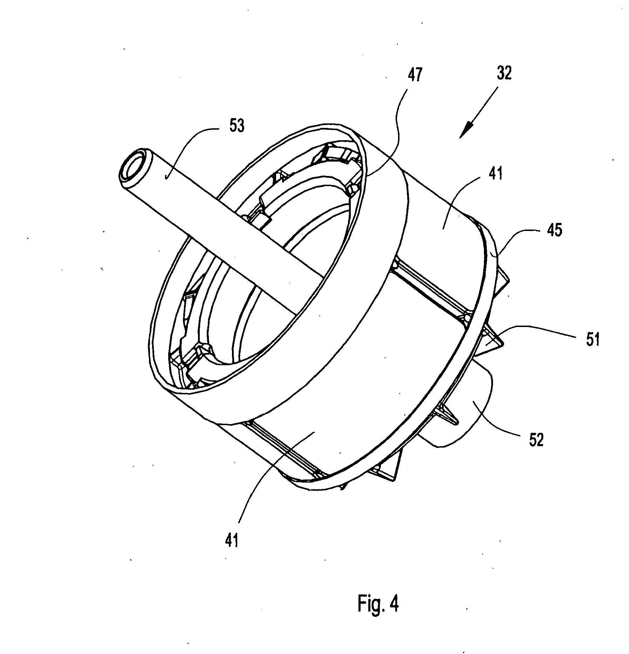

Ein erfindungsgemäßer Rotor 32, der mit einem erfindungsgemäßen Stator 1 zur Herstellung eines Innenläufermotors verwendet wird, besteht, siehe Fig. 3 und 4, aus einem Rotorträger 40 mit auf diesem angeordneten Magneten 41. Diese Magnete 41 besitzen jeweils wechselnde Polarität. Weiterhin weist der Rotor 32 einen inneren Eisenrückschlussring 42 auf. Der Rotorträger 40 besitzt gemäß der Erfindung eine hohlyzylindrische Kunststoffhülse 43, an der einendig eine Ringscheibe 44 mit einem Ringkragen 45 angeformt ist. In dem Ringkragen 45 sind an seiner Innenseite umfangsgemäß Einstecknuten 46 vorgesehen. Der erfindungsgemäße Rotor 32 weist weiterhin ein ringförmiges Endstück 47 auf, das dem Ringkragen 45 gegenüberliegend an den Magneten 41 stirnseitig anliegt und mit dem Ringkragen 45 formschlüssig verbindbar ist. Dieses Endstück 47 ist ebenfalls als Kunststoffspritzgussteil wie der Rotorträger 40 ausgebildet. Das Endstück 47 weist ebenfalls Einstecknuten zur Aufnahme der Magneten 41 und des Eisenrückschlussringes 42 auf, und zwar in der gleichen Anordnung wie im Ringkragen 45. In den Einstecknuten 46 des Endstücks 47 und des Ringkragens 45 sind mehrere der Anzahl der Magnete 41 entsprechend radiale Fortsätze 48 ausgebildet, deren Abstand der Bogenlänge der Magnete 41 entspricht. Der Eisenrückschlussring 42 weist stirnseitig beidseitig Aussparungen 50 auf, die die radialen Fortsätze 48 umfassen. Der Eisenrückschlussring 42 besteht aus zwei Halbschalen, die durch eine Art Schwalbenschwanzverbindung 54 miteinander formschlüssig verbunden sind. An der Kunststoffhülse 43, an ihrer dem Ringkragen 45 gegenüberliegenden Ende, weist diese axiale Rastzungen 49 mit endseitigen Rastnasen auf. Diese Rastzungen 49 greifen in entsprechende Rastöffnungen des Endstücks 47 im montierten Zustand des Endstückes 47 ein, so dass eine formschlüssige Verbindung erreicht wird. An der axialen Außenseite weist der Ringkragen 45 Flügelradflügel 51 auf, die an diesen einstückig rippenartig angespritzt sind. Hierdurch wird ein Flügelrad an dem Ringkragen 45 ausgebildet, das zur Kühlung einer Motorelektronik dienen kann. Weiterhin weist der Ringkragen 45 einen in axialer Richtung nach außen abstehenden Lageransatz 52 auf, in den eine Rotorachswelle 53 eingepresst ist, die durch das Lagertragrohr 19 verläuft.

In Fig. 5 ist ein erfindungsgemäßer Motor 55 dargestellt, der aus dem Stator 1 und dem Rotor 32 zusammengesetzt ist. Hier ist zu erkennen, dass im Lagertragrohr 19 zwei axial beabstandete Lagersitze ausgebildet sind, in denen Kugellager 56 angeordnet sind. Einer der Lagersitze befindet sich im Bereich der Hohlkammern 22. Die Leiterplatte 31 ist an der Außenseite der Endscheibe 8 über Rastansätze rastend befestigt und besitzt eine zentrische Öffnung, durch die der Lageransatz 52 verläuft. Der Motor weist ein zweiteiliges Gehäuse 57 auf, das den Stator 1 und den Rotor 32 umschließt, jedoch an seinem Umfang im Bereich des Jochteils 3 eine Umfangsöffnung 58 besitzt. Im Übrigen sind gleiche Teile wie in den vorhergehenden Figuren mit denselben Bezugszeichen versehen. Der erfindungsgemäße Motor ist als elektronisch-kommutierter Motor ausgebildet und zeichnet sich einerseits durch seine kompakte Bauform und andererseits durch einen hohen Wirkungsgrad aus.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung auf die im Anspruch 1 definierte Merkmalskombination beschränkt.

## Patentansprüche

1. Elektrischer Motor, insbesondere elektronisch-kommutierter netzgespeister Motor, mit einem Stator (1), bestehend aus einem zweiteiligen Statorblechpaket aus einem Statorpolteil (2), welches aus einzelnen sternförmig angeordneten, paketierten Polsegmenten (4) (Polzähnen) besteht, und einem auf dem Statorpolteil (2) aufpressbaren äußeren Jochteil (3), sowie einem Rotor (32),
**dadurch gekennzeichnet, dass** diePolsegmente(4)ineinem vorgefertigten Isolationskörper (6) sternförmig angeordnet sind, wobei der Isolationskörper (6) zweiteilig aus dem Trägerteil (7) und einer Endscheibe (8) besteht und die Polsegmente (4) von dem lsolationskörper (6) an ihren beiden axialen Stirnseiten und im Bereich eines zwischen den Polsegmenten (4) ausgebildeten Wickelraums (13) zur Aufnahme von Statorwicklungen (34) umschlossen sind, und der Isolationskörper (6) ein radial innenliegendes Lagertragrohr (19) aufweist, das von einer axial äußeren Stirnwandung (20) des lsolationskörpers (6) nach axial innen in den Stator (1) verläuft, und der Rotor (32) einen aus einer hohlzylindrischen Kunststoffhülse (43) bestehenden Rotorträger (40) aufweist, an dem ein Eisenrückschlussring (42) und mehrere Magnete (41) des Rotors (32) befestigt sind.

2. Elektrischer Motor nach Anspruch 1,
**dadurch gekennzeichnet, dass** das Trägerteil (7) und die Endscheibe (8) des Isolationskörpers (6) miteinander form- und/oder materialschlüssig verbunden und die Polsegmente (4) in das Trägerteil (7) eingelegt sind.

3. Elektrischer Motor nach einem der Ansprüche 1 bis 2,
**dadurch gekennzeichnet, dass** das Lagertragrohr (19) in seiner Rohrwandung im Bereich seines freien Endes mindestens mehrere, insbesondere sechs am Umfang gleichmäßig beabstandete, axial verlaufende Hohlkammern (22) oder auf der Rohrwandung ausgebildete Einbuchtungen aufweist.

4. Elektrischer Motor nach einem der Ansprüche 1 bis 3,
**dadurch gekennzeichnet, dass** das Trägerteil (7) zwischen den Polsegmenten (4) an deren Form angepasste, zwischen deren radial inneren Seite (11) und radial äußeren Seite (10) verlaufende Wandungen (12) aufweist, wobei die Wandungen (12) für benachbarte Polsegmente (4) an ihren radial innenliegenden Enden miteinander verbunden sind und jeweils einen Wickelraum (13) einschließen, der einen mittig angeordneten Wicklungsschlitz (14) aufweist.

5. Elektrischer Motor nach dem Anspruch 4,
**dadurch gekennzeichnet, dass** im Verbindungsbereich der radial innenliegenden Enden der Wandungen (12) sich in axialer Richtung erstreckende Stege (15) ausgebildet sind, an denen die Polsegmente (4) mit ihren radial inneren Polschuhen (16) anliegen.

6. Elektrischer Motor nach einem der Ansprüche 1 bis 5,
**dadurch gekennzeichnet, dass** der Isolationskörper (6) bzw. die Endscheibe (8) das Statorpoiteit (2) an seiner axialen Stirnseite abdeckt, wozu die Endscheibe (8) einen radial inneren geschlossenen Ringsteg (24) aufweist sowie mit dem Ringsteg (24) verbundene radial nach außen verlaufende Radialstege (25) und an diesen an ihren radial außen liegenden Enden ausgebildete Umfangsstege (26).

7. Elektrischer Motor nach einem der Ansprüche 1 bis 6,
**dadurch gekennzeichnet, dass** an der Endscheibe (8) im Bereich der Umfangsstege (26) Aufnahmetaschen (27) für Schneid-Klemmkontakte ausgebildet sind.

8. Elektrischer Motor nach einem der Ansprüche 1 bis 7,
**dadurch gekennzeichnet, dass** an der Endscheibe (8) im Bereich der Umfangsstege (26) in axialer Richtung abstehende Ringstege (29) angeformt sind.

9. Elektrischer Motor nach einem der Ansprüche 1 bis 8,
**dadurch gekennzeichnet, dass** im Bereich des inneren geschlossenen Ringsteges (24) der Endscheibe (8) ein in axialer Richtung abstehender Umfangskragen (30) vorhanden ist.

10. Elektrischer Motor nach einem der Ansprüche 1 bis 9,
**dadurch gekennzeichnet, dass** der Rotorträger (40) aus einer hohlzylindrischen Kunststoffhülse (43) sowie aus einem dem Ringkragen (45) gegenüberliegenden, die Magneten (41) formschlüssig aufnehmenden ringförmigen Endstück (47) besteht, wobei an der Kunststoffhülse (43) an einem Ende eine Ringscheibe (44) mit einem Ringkragen (45) angeformt ist, sowie in dem Ringkragen (45) innenseitig umfangsgemäß Einstecknuten (46) zur stirnseitigen Aufnahme der Magnete (41) und des Eisenrückschlussringes (42) ausgebildet sind.

11. Elektrischer Motor nach dem Anspruch 10,
**dadurch gekennzeichnet, dass** in den Einstecknuten (46) mehrere der Anzahl der Magnete (41) entsprechende radial Fortsätze (48) ausgebildet sind, deren Abstand der Bogenlänge der Magnete (41) entspricht.

12. Elektrischer Motor nach einem der Ansprüche 10 bis 11,
**dadurch gekennzeichnet, dass** in dem ringförmigen Endstück (47) den Einstecknuten (46) des Ringkragens (45) entsprechende Einstecknuten und radiale Fortsätze (48) ausgebildet sind.

13. Elektrischer Motor nach dem Anspruch 12,
**dadurch gekennzeichnet, dass** in dem Eisenrückschlussring (42) stirnseitig beidseitig Aussparungen (50) ausgebildet sind, die die radialen Fortsätze (48) umfassen.

14. Elektrischer Motor nach einem der Ansprüche 1 bis 13,
**dadurch gekennzeichnet, dass** an dem dem Ringkragen (45) gegenüberliegenden Ende der Kunststoffhülse (43) axiale Rastzungen (49) mit Rastnasen an einem Ende ausgebildet sind, die in entsprechende Rastöffnungen des Endstücks (47) einrasten.

15. Elektrischer Motor nach einem der Ansprüche 1 bis 14,
**dadurch gekennzeichnet, dass** der Eisenrückschlussring (42) aus zwei Halbschalen besteht, die über eine Art Schwalbenschwanzverbindung (54) miteinander formschlüssig verbunden sind.

16. Elektrischer Motor nach einem der Ansprüche 10 bis 15,
**dadurch gekennzeichnet, dass** der Ringkragen (45) an seiner Außenseite rippenartige Flügelradflügel (51) aufweist.

17. Elektrischer Motor nach einem der Ansprüche 10 bis 16,
**dadurch gekennzeichnet, dass** an der Ringscheibe (44) ein zentrischer Lageransatz (52) ausgebildet ist, in dem eine Rotorachswelle (53) an einem Ende befestigt ist.

18. Elektrischer Motor nach einem der Ansprüche 1 bis 17,
**dadurch gekennzeichnet, dass** dasJochteil(3)einenim Wesentlichen quadratischen Umfang und eine innere kreisförmige Aufnahmeöffnung (34), die von der Größe dem Umfang des Statorpolteils (2) angepasst ist, so dass diese durch einen Presssitz miteinander verbunden werden können, aufweist.

19. Elektrischer Motor nach einem der Ansprüche 4 bis 17,
**dadurch gekennzeichnet, dass** das Jochteil (3) am Umfang seiner Aufnahmeöffnung (34) radial abstehende, axial verlaufende Randstege (35), die im aufgepressten Zustand des Jochteils (3) in die Wicklungsschlitze (14) des Isolationskörpers (6) hineinragen, aufweist.

## Claims

1. Electric motor, in particular electronically commutated mains-operated motor, having a stator (1), consisting of a two-part stator laminated core formed of a stator pole part (2), which consists of individual packed pole segments (4) (pole teeth) arranged in the form of a star, and of an outer yoke part (3) which can be pressed onto the stator pole part (2), and also having a rotor (32),
**characterised in that** the pole segments (4) are arranged in the form of a star in a prefabricated insulation body (6), the insulation body (6) consisting of two parts, the carrier part (7) and an end disc (8), and the pole segments (4) being enclosed by the insulation body (6) at their two axial end faces and in the region of a winding space (13) formed between the pole segments (4) and serving to receive stator windings (34), and the insulation body (6) having a radially inner bearing carrying tube (19) running from an axially outer end wall (20) of the insulation body (6) axially inwards into the stator (1), and the rotor (32) having a rotor carrier (40) which consists of a hollow-cylindrical plastic sleeve (43) and to which a back-iron ring (42) and a plurality of magnets (41) of the rotor (32) are fastened.

2. Electric motor according to Claim 1,
**characterised in that** the carrier part (7) and the end disc (8) of the insulation body (6) are connected to one another in a form-locked and/or materially joined manner and the pole segments (4) are inserted into the carrier part (7).

3. Electric motor according to one of Claims 1 to 2,
**characterised in that** the bearing carrying tube (19) has in its tube wall, in the region of its free end, at least a plurality of, in particular six, axially running hollow chambers (22) spaced evenly at the circumference or indentations formed on the tube wall.

4. Electric motor according to one of Claims 1 to 3,
**characterised in that** the carrier part (7) has between the pole segments (4) walls (12) which are adapted to the shape of and run between the radially inner side (11) and radially outer side (10) of the pole segments (4), the walls (12) for neighbouring pole segments (4) being connected to one another at their radially inner ends and each enclosing a winding space (13) having a centrally arranged winding slot (14).

5. Electric motor according to Claim 4,
**characterised in that** webs (15) extending in the axial direction are formed in the connecting region of the radially inner ends of the walls (12), against which webs (15) the pole segments (4) bear with their radially inner pole shoes (16).

6. Electric motor according to one of Claims 1 to 5,
**characterised in that** the insulation body (6), or the end disc (8), covers the stator pole part (2) at its axial end face, for which purpose the end disc (8) has a radially inner closed annular web (24) and also radially outwardly running radial webs (25) connected to the annular web (24), and circumferential webs (26) formed on the radial webs (25) at their radially outer ends.

7. Electric motor according to one of Claims 1 to 6,
**characterised in that** receiving pockets (27) for insulation displacement contacts are formed on the end disc (8) in the region of the circumferential webs (26).

8. Electric motor according to one of Claims 1 to 7,
**characterised in that** annular webs (29) projecting in the axial direction are integrally formed on the end disc (8) in the region of the circumferential webs (26).

9. Electric motor according to one of Claims 1 to 8,
**characterised in that** a circumferential collar (30) projecting in the axial direction is present in the region of the inner closed annular web (24) of the end disc (8).

10. Electric motor according to one of Claims 1 to 9,
**characterised in that** the rotor carrier (40) consists of a hollow-cylindrical plastic sleeve (43) and also of an annular end piece (47) lying opposite the annular collar (45) and receiving the magnets (41) in a form-locked manner, an annular disc (44) with an annular collar (45) being integrally formed on the plastic sleeve (43) at one end, and also insertion grooves (46) for receiving the end faces of the magnets (41) and of the back-iron ring (42) being formed in the annular collar (45) circumferentially on the inner side.

11. Electric motor according to Claim 10,
**characterised in that** a plurality of radial projections (48), corresponding to the number of magnets (41), the spacing of which projections (48) corresponds to the arc length of the magnets (41) are formed in the insertion grooves (46).

12. Electric motor according to one of Claims 10 to 11,
**characterised in that** insertion grooves corresponding to the insertion grooves (46) of the annular collar (45) and radial projections (48) are formed in the annular end piece (47).

13. Electric motor according to Claim 12,
**characterised in that** recesses (50) which encompass the radial projections (48) are formed in the back-iron ring (42) at both end faces.

14. Electric motor according to one of Claims 1 to 13,
**characterised in that** axial latching tongues (49) are formed on the end of the plastic sleeve (43) lying opposite the annular collar (45) and have latching lugs at one end which latch into corresponding latching openings of the end piece (47).

15. Electric motor according to one of Claims 1 to 14,
**characterised in that** the back-iron ring (42) consists of two half-shells which are connected to one another in a form-locked manner via a kind of dovetail joint (54).

16. Electric motor according to one of Claims 10 to 15,
**characterised in that** the annular collar (45) has riblike impeller blades (51) on its outer side.

17. Electric motor according to one of Claims 10 to 16,
**characterised in that** a central bearing extension (52), in which a rotor axle shaft (53) is fastened at one end, is formed on the annular disc (44).

18. Electric motor according to one of Claims 1 to 17,
**characterised in that** the yoke part (3) has a substantially square circumference and an inner circular receiving opening (34) which is adapted to the size of the circumference of the stator pole part (2), so that said parts can be connected to one another by a press fit.

19. Electric motor according to one of Claims 4 to 17,
**characterised in that** the yoke part (3) has at the circumference of its receiving opening (34) radially projecting, axially running edge webs (35) which project into the winding slots (14) of the insulation body (6) in the pressed-on state of the yoke part (3).

## Revendications

1. Moteur électrique, en particulier moteur à commutation électronique, alimenté par le réseau, comportant un stator (1), formé par un empilage de tôles en deux parties formé par un élément polaire (2), qui est constitué de différents segments polaires (4) (dents polaires) agencés en forme d'étoile et empilés, et une culasse (3) extérieure, apte à être pressée sur l'élément polaire (2), ainsi qu'un rotor (32),
**caractérisé en ce que** les segments polaires (4) sont disposés en forme d'étoile dans un corps isolant (6) préfabriqué, ledit corps isolant (6) étant constitué de deux parties formées par l'élément support (7) et le flasque terminal (8), et les segments polaires (4) étant entourés par le corps isolant (6) au niveau de leurs deux faces frontales axiales et dans la zone d'un compartiment d'enroulement (13), réalisé entre les segments polaires (4) pour recevoir les enroulements (34) du stator, et ledit corps isolant (6) comportant un support de palier tubulaire (19) radialement intérieur, qui depuis une paroi frontale (20) axialement extérieure du corps isolant (6) s'étend axialement vers l'intérieur dans le stator (1), et le rotor (32) comporte un porte-rotor (40) formé par un manchon plastique (43) cylindrique creux, contre lequel sont fixés une bague de dérivation en fer (42) et plusieurs aimants (41) du rotor (32).

2. Moteur électrique selon la revendication 1, **caractérisé en ce que** l'élément support (7) et le flasque terminal (8) du corps isolant (6) sont reliés l'un à l'autre par conjugaison de forme et/ou par adhérence de matière et les segments polaires (4) sont insérés dans l'élément support (7).

3. Moteur électrique selon l'une quelconque des revendications 1 à 2, **caractérisé en ce que** le support de palier tubulaire (19) comporte dans sa paroi, dans la zone de son extrémité libre, au moins plusieurs, en particulier six chambres creuses (22), écartées uniformément les unes des autres sur le pourtour et orientées axialement, ou des échancrures réalisées sur la paroi dudit tube.

4. Moteur électrique selon l'une quelconque des revendications 1 à 3, **caractérisé en ce que** l'élément support (7) comporte, entre les segments polaires (4), des parois (12) ajustées à la forme de ces derniers et s'étendant entre la face radialement intérieure (11) de ceux-ci et la face radialement extérieure (10) de ceux-ci, lesdites parois (12) pour des segments polaires (4) adjacents étant reliées entre elles au niveau de leurs extrémités radialement intérieures et enserrant chacune un compartiment d'enroulement (13) qui comporte une fente d'enroulement (14) disposée au milieu.

5. Moteur électrique selon la revendication 4, **caractérisé en ce que** dans la zone de liaison des extrémités radialement intérieures des parois (12) sont réalisées des nervures (15), qui s'étendent dans la direction axiale et sur lesquelles les segments polaires (4) viennent en appui avec leurs épanouissements polaires (16) radialement intérieurs.

6. Moteur électrique selon l'une quelconque des revendications 1 à 5, **caractérisé en ce que** le corps isolant (6), plus précisément le flasque terminal (8) couvre l'élément polaire (2) du stator au niveau de sa face frontale axiale, le flasque terminal (8) comportant à cet effet une ailette annulaire (24) radialement intérieure fermée, ainsi que des ailettes radiales (25), reliées à l'ailette annulaire (24) et s'étendant radialement vers l'extérieur, et des ailettes périphériques (26) réalisées sur lesdites ailettes radiales au niveau de leurs extrémités radialement extérieures.

7. Moteur électrique selon l'une quelconque des revendications 1 à 6, **caractérisé en ce que** des poches de réception (27) pour des contacts de borne guillotine sont réalisées au niveau du flasque terminal (8) dans la zone des ailettes périphériques (26).

8. Moteur électrique selon l'une quelconque des revendications 1 à 7, **caractérisé en ce que** des ailettes annulaires (29) en saillie dans la direction axiale sont formées au niveau du flasque terminal (8) dans la zone des ailettes périphériques (26).

9. Moteur électrique selon l'une quelconque des revendications 1 à 8, **caractérisé en ce qu'**un collet périphérique (30) en saillie dans la direction axiale est disposé dans la zone de l'ailette annulaire (24) intérieure fermée du flasque terminal (8).

10. Moteur électrique selon l'une quelconque des revendications 1 à 9, **caractérisé en ce que** le porte-rotor (40) est formé par un manchon plastique (43) cylindrique creux, ainsi que par un embout (47) annulaire, situé en regard du collet annulaire (45) et recevant les aimants (41) par conjugaison de forme, un disque annulaire (44) avec un rebord annulaire (45) étant formé sur le manchon plastique (43) au niveau d'une extrémité, et des rainures d'enfichage (46) étant réalisées dans le rebord annulaire (45) sur le pourtour du côté intérieur, en vue de recevoir frontalement les aimants (41) et la bague de dérivation en fer (42).

11. Moteur électrique selon la revendication 10, **caractérisé en ce que** dans les rainures d'enfichage (46) sont réalisées plusieurs saillies (48) radiales, qui correspondent au nombre d'aimants (41) et dont l'écartement correspond à la longueur d'arc des aimants (41).

12. Moteur électrique selon l'une quelconque des revendications 10 à 11, **caractérisé en ce que** dans l'embout (47) annulaire sont réalisées des rainures d'enfichage et des saillies radiales (48) correspondant aux rainures d'enfichage (46) du rebord annulaire (45).

13. Moteur électrique selon la revendication 12, **caractérisé en ce que** dans la bague de dérivation en fer (42) sont réalisés, du côté frontal et de part et d'autre, des évidements (50) qui entourent les saillies (48) radiales.

14. Moteur électrique selon l'une quelconque des revendications 1 à 13, **caractérisé en ce que** sur l'extrémité du manchon plastique (43), située en regard du rebord annulaire (45), sont réalisées des languettes de blocage (49) axiales avec des ergots de blocage à une extrémité, qui se bloquent dans des orifices de blocage correspondants de l'embout (47).

15. Moteur électrique selon l'une quelconque des revendications 1 à 14, **caractérisé en ce que** la bague de dérivation en fer (42) est formée par deux demi-coques, qui sont assemblées par conjugaison de forme l'une avec l'autre à la manière d'un assemblage à queue d'aronde (54).

16. Moteur électrique selon l'une quelconque des revendications 10 à 15, **caractérisé en ce que** le rebord annulaire (45) comporte des ailettes (51) de roues à ailettes en forme de nervures sur la face extérieure.

17. Moteur électrique selon l'une quelconque des revendications 10 à 16, **caractérisé en ce que** sur le disque annulaire (44) est réalisée une embase d'appui (52) centrée, dans laquelle est fixé un arbre (53) du rotor au niveau d'une extrémité.

18. Moteur électrique selon l'une quelconque des revendications 1 à 17, **caractérisé en ce que** la culasse (3) possède un pourtour sensiblement carré et une ouverture de réception (34) circulaire intérieure, qui est ajustée à la dimension du pourtour de l'élément polaire (2) du stator, de telle sorte que ceux-ci peuvent être reliés l'un à l'autre par un ajustement serré.

19. Moteur électrique selon l'une quelconque des revendications 4 à 17, **caractérisé en ce que** la culasse (3), sur la périphérie de son ouverture de réception (34), comporte des nervures périphériques (35), s'avançant en saillie dans la direction radiale et s'étendant dans la direction axiale, lesquelles, dans la position montée de la culasse (3), s'engagent dans les fentes d'enroulement (14) du corps isolant (6).
